(19) Europäisches Patentamt
European Patent Office
Office européen des brevets

(11) **EP 0 586 644 B1**

(12) **EUROPÄISCHE PATENTSCHRIFT**

(45) Veröffentlichungstag und Bekanntmachung des Hinweises auf die Patenterteilung:
**06.11.1996 Patentblatt 1996/45**

(21) Anmeldenummer: 93905181.9

(22) Anmeldetag: **12.03.1993**

(51) Int. Cl.[6]: **B29B 17/00**, B29C 67/20, B29B 13/06, B29C 43/04 // B29K75:00

(86) Internationale Anmeldenummer:
**PCT/DE93/00225**

(87) Internationale Veröffentlichungsnummer:
**WO 93/19917** (14.10.1993 Gazette 1993/25)

(54) **RECYCLING-VERFAHREN FÜR POLYURETHAN-HARTSCHAUM**

METHOD OF RECYCLING RIGID EXPANDED POLYURETHANE

PROCEDE DE RECYCLAGE POUR MOUSSE DE POLYURETHANE RIGIDE

(84) Benannte Vertragsstaaten:
AT BE CH DE DK ES FR GB GR IE IT LI LU MC NL PT SE

(30) Priorität: 30.03.1992 DE 4210323
02.03.1993 DE 4306447
04.03.1993 DE 4306626

(43) Veröffentlichungstag der Anmeldung:
**16.03.1994 Patentblatt 1994/11**

(73) Patentinhaber: **HECKER UND KROSCH GMBH & Co.**
**D-53909 Zülpich (DE)**

(72) Erfinder:
• KROSCH, Karl
**D-5352 Zülpich (DE)**
• KROSCH, Barthel
**D-5352 Zülpich (DE)**
• KROSCH, Michael
**D-5352 Zülpich (DE)**
• ECKER, Robert
**D-52391 Vettweiss (DE)**

(74) Vertreter: **Schulte, Jörg, Dipl.-Ing.**
**Hauptstrasse 2**
**45219 Essen (DE)**

(56) Entgegenhaltungen:
DE-A- 3 530 754          GB-A- 2 116 572
US-A- 4 591 469          US-A- 4 666 646

• PATENT ABSTRACTS OF JAPAN vol. 6, no. 94 (C-105)(972) 2. Juni 1982 & JP,A,57 023 636 (INOUE EMU TEE PII K.K.) 6. Februar 1982 siehe Zusammenfassung
• PATENT ABSTRACTS OF JAPAN vol. 11, no. 317 (C-452)(2764) 15. Oktober 1987 & JP,A,62 104 865 (SAKUSHIN KOGYO K.K.) 15. Mai 1987 siehe Zusammenfassung
• PATENT ABSTRACTS OF JAPAN vol. 6, no. 130 (M-143)(1008) 16. Juli 1982 & JP,A,57 056 218 (TOYOTA JIDOSHA KOGYO K.K.) 3. April 1982 siehe Zusammenfassung

## Beschreibung

Die Erfindung betrifft ein Verfahren zum Recyceln von Polyurethan-Hartschaum und zur Herstellung von Formkörpern aus vorbehandeltem Hartschaum, durch Zerkleinern des Ausgangsproduktes auf < 10 mm, Vermischen mit einem Bindemittel (Polyurethankleber) und Verpressen bei Temperaturen zwischen 100 und 200° C und einem Druck von bis zu 20 N/mm². Die Erfindung betrifft außerdem eine Anlage zur Aufarbeitung von Polyurethan-Hartschaum mit einer Mühle, einem Klassiersieb, einer Mischeinrichtung und einer Presse.

Ein derartiges Verfahren ist bekannt (JP-A-57-34926 und FR-A-20 29 622), bei dem aus Partikeln eines harten Polyurethanschaumes und einem Bindemittel Material für Verpackungs- und Isolationszwecke hergestellt wird. Diese Partikel werden entsprechend zerkleinert auf unter 20 bzw. 10 mm, mit dem Bindemittel gemischt und dann in einer beheizten Presse komprimiert, um die so erhaltenen Platten dann als wärmedämmendes Material einzusetzen. Allerdings haben diese Platten eine zu geringe Elastizität und Bruchfestigkeit, so daß sie als Platten in dem Sinne nicht einsetzbar sind, sondern allenfalls als Ersatz für Steinwolle o.ä. Matten. Aus der DD-PS 144 885 ist ein Verfahren zur Herstellung von Formteilen aus Polyurethanschaumabfällen bekannt, bei dem zerkleinerte Polyurethanschaumabfälle mit einer Korngröße zwischen 0,5 mm und 10 mm Durchmesser mit einer Gummilösung benetzt werden. Aus diesem Ausgangsmaterial werden Platten, Belege u.a. Formteile hergestellt. Zur Herstellung von flexiblen Bodenbelagplatten ist es ferner bekannt (DE-OS 24 39 672), geschnitzelte Kunstlederabfälle u.a. zerkleinerte Materialien aus thermoplastischem Kunststoff in einer Strangpreßmaschine zu plastifizieren und aus dem so durchgearbeiteten Material mit Hilfe einer Preßeinrichtung eine Bahn zu erzeugen, die dann in Einzelplatten zerschnitten wird. Ferner ist es bekannt, aus einem Gemisch aus Integralschaum-Granulat und Flocken sowie weichem Polyurethanschaum in einer beheizten Presse bei etwa 190 bis 200° C rutschfeste Auslegeware herzustellen (DD-PS 114 927). Die Flocken aus weichem Polyurethanschaum dienen hierbei als das Bindemittel.

Schließlich ist es der DE-OS 38 44 664 zu entnehmen, in einem Zweischrittverfahren aus entsprechend zerkleinertem Polyurethanschaum und einem Bindemittel zunächst einmal mit geringerem Druck das Material zu komprimieren, um dann in einem zweiten Schritt mit höherem Druck (4 N/mm²) das Material endzuverdichten. Die so hergestellten Platten sollen Spanplatten hinsichtlich Elastizität und Bruchfestigkeit übertreffen. Nachteilig ist allerdings, daß dieses Verfahren im wesentlichen astreine Produktionsabfälle voraussetzt. Außerdem hat sich gezeigt, daß eine Zerkleinerung auf 20 mm und kleiner, d.h. also bis etwa 10 mm, nicht ausreicht, um das Verfahren einwandfrei durchzuführen. Besonders nachteilig ist, daß in diskontinuierlichen Schritten gearbeitet werden muß, weil die Presse nach Erreichen des Endpreßweges eine zeitlang angehalten werden muß, bevor eine Entlastung und ein Ausformen möglich ist. Der Ausstoß einer derartigen nach dem beschriebenen Verfahren arbeitenden Anlage ist damit begrenzt.

Der Erfindung liegt daher die Aufgabe zugrunde, ein Verfahren und eine Anlage zu schaffen, mit denen PU-Schaum-Recycling-Material mit Verunreinigungen sicher und weitgehend kontinuierlich verarbeitet werden kann.

Die Aufgabe wird erfindungsgemäß dadurch gelöst, daß das Ausgangsprodukt auf 2 bis 4 % Feuchtigkeit getrocknet und dann in eine das Formteil vorgebende, mehrteilige Form eingefüllt wird, daß die Formen unter Erzeugung des Verdichtungsdruckes zusammengepreßt und verriegelt, die Formteile dabei unter Belassung von Entlüftungswegen verdichtet, die Formen dann von außen bis zu einer Formguttemperatur von 80 bis 180° C erwärmt und für eine vorgegebene Haltezeit geschlossen gehalten und die Formteile dann ausgeformt werden.

Das erfindungsgemäße Verfahren sieht zunächst eine Trocknung auf 2 bis 4 % oder je nach Material auch bis zu 10 % vor, um während des Preßvorganges Spannungen durch das Verdunsten des Wassers zu verhindern und um gleichzeitig eine gleichmäßige Wärmeleitung innerhalb des Formteils zu sichern. Sollte der Feuchtigkeitsgehalt des Ausgangsproduktes unter 2 bis 4 % liegen, so wäre eine entsprechende Befeuchtung notwendig, da nur dann das Durchheizen des Preßlings zu sichern ist. Gleichzeitig besteht die Tendenz zur Reaktion von Isocyanat mit Luftfeuchtigkeit bzw. Feuchtigkeit, was den Abbindeprozeß sichert. Anschließend wird dann das entsprechend vorbehandelte Ausgangsprodukt in eine mehrteilige Form eingefüllt, die als solche gleichzeitig als Presse dient, indem die Formteile gegeneinander zu pressen und dann zu verriegeln sind, so daß der durch das Zusammenpressen der beiden Formteile erzielte Druck auch erhalten bleibt. Dieser ganze Vorgang läuft zunächst ohne Erwärmen ab, wobei die Form selbst warm ist. Endtemperatur erhält das Formgut dann erst beim Erwärmen der Form von außen her, wodurch eine weitgehende Kontinuität des erfindungsgemäßen Verfahrens möglich wird. Die einzelnen, mit Formgut gefüllten Formen können nämlich beispielsweise durch einen Ofen geschickt werden, so daß eine gewisse Kontinuität erreicht und gesichert ist. Nach entsprechender Haltezeit nach Abschluß der Aufheizung können die Formen dann aus der Heizzone herausgeführt, geöffnet und die Formteile dann ausgeformt werden. Die so erzeugten Formteile eignen sich für die verschiedensten Einsatzzwecke, so können beispielsweise daraus Kabeltrommeln bzw. die für die Herstellung von Kabeltrommeln benötigten Einzelformteile hergestellt und dann zu Kabeltrommeln zusammengestellt werden. Derartige Kabeltrommeln, die einer erheblichen Belastung unterworfen sind, können diese Belastungen ohne weiteres aufnehmen, weil die entsprechend hergestellten Formteile hohe Festigkeits- und Elastizitätswerte erbringen. Als Formteile sind auch Platten anzusehen.

Eine vorteilhafte Bindefähigkeit ergibt sich, wenn das Ausgangsprodukt auf < 2 bis 4 mm unter Einhaltung eines Staubanteils von rd. 30 % zerkleinert, mit 8 bis 40 g/sec Isocyanat in Form eines Sprühnebels beaufschlagt und dann zu Formteilen verarbeitet wird. Es zeigt sich, daß bei einem derartigen Gemisch eine günstige Kornverteilung erhalten wird, die entsprechend gute Festigkeitswerte sichert. Höhere Staubanteile dagegen führen zu Festigkeitsverlust des noch warmen auszuformenden Formteils und zu erheblicher Versprödung. Höhere Anteile gröberen Korns bergen die Gefahr, daß Brüche an der Oberfläche des Formteils auftreten, so daß wiederum dadurch Beeinträchtigungen eintreten können. Da das Ausgangsprodukt zunächst einmal ohne gleichzeitiges Erwärmen verdichtet werden muß, ist es vorteilhaft, wenn der Verdichtungsdruck innerhalb der Form kontinuierlich auf max. 20 N/mm$^2$ gebracht wird, wobei diese hohe spezifische Preßkraft allerdings ausschließlich zum Erreichen des Pressenweges und zum Verriegeln genutzt wird. Damit ist aber sichergestellt, daß innerhalb der Form das notwendige, für die Zusammenfügung des Formteils notwendige Druck gesichert ist. Über das Isocyanat wird dem Gemisch ein vorteilhaft wirkendes Bindemittel zugeführt. Geeignet sind flüssige, lösungsmittelfreie Diphenylmethan-4, 4'-Diisocyanate mit Isomeren und höherfunktionellen Homologen. Die Menge richtet sich nach dem Mischungsvolumen. Dieses Isocyanat bzw. Ixocyanat-Gemisch wird temperiert mit 25 bis 30 °C mind. Raumtemperatur vorgehalten und entsprechend aufgesprüht. Die Formen werden dann auch unter Druck entriegelt.

Um sicherzustellen, daß das Gut dann anschließend auch ausreichend hoch erwärmt wird, ist vorgesehen, daß das Formgut in der Form vorzugsweise beim Durchlaufen durch einen Ofen auf ± 130 °C erwärmt wird. Zur Erwärmung wird die Form durch einen Tunnelofen geführt, der zur Verkürzung der Durchlaufzeit in mindestens zwei Bereiche unterteilt ist. Zunächst wird die Form möglichst schnell auf ihre Solltemperatur erwärmt, wobei für einen schnellen Wärmeübergang die Ofentemperatur deutlich über dem Sollwert für die Form liegt. Insbesondere dann, wenn ein dritter Bereich innerhalb des Tunnelofens zur Verfügung steht, sollte die Ofentemperatur möglichst über dem Sollwert liegen. Hat die Form dann die erforderliche Temperatur, ist noch die Haltezeit zu berücksichtigen. Hierbei kann man davon ausgehen, daß je nach Wärmekapazität der Form eine begrenzte Zeit am Ende der Haltezeit auch außerhalb der zu beheizenden Zone möglich ist. Die Haltezeit beträgt vorzugsweise 10 - 20 Min.

Mit Hilfe des Verfahrens ist es überraschend möglich, ein großes Entsorgungsproblem zu lösen, indem dem Ausgangsprodukt während der Zerkleinerung Zuschlagstoffe wie PVC-Granulat oder gar Kabelschrott oder Zellulose in Form von Papier und Pappe mit einem Anteil bis 80 % zugemischt wird. Trotz der metallischen Anteile wird die Preßbarkeit und die Festigkeit der Endprodukte nicht wesentlich negativ beeinflußt. Das Einarbeiten der Abfallstoffe ist möglich, wobei dem Hartschaum Zellulose, vorzugsweise in Form von Papier zugegeben, mit diesem vermischt und dann weiterbehandelt wird. Überraschend fügt sich dieses Material (Zellulose) vollständig in das Gemisch ein, ohne daß der Verfahrensgang geändert werden muß.

Dort, wo ein entsprechender Tunnelofen nicht zur Verfügung steht oder eine ähnliche zur kontinuierlichen Erwärmung der Formkörper bzw. Formen geeignete Heizeinrichtung, ist es von Vorteil, wenn das Ausgangsprodukt auf < 4 mm zerkleinert und 2 bis 4 % Feuchtigkeit getrocknet, dann in einer Verdichtungsphase in einem zweiteiligen Werkzeug mit 2,5 bis 5 N/mm$^2$ unter Belassung von Entlüftungswegen verdichtet und daß anschließend der Druck für eine vorgegebene Haltezeit aufrechterhalten wird, wobei das zweiteilige Werkzeug auf 80 bis 180 °C beheizt wird, woraufbin die Formteile ausgeformt werden. Ein solches Verfahren hat zwar den Nachteil, daß aufgrund der zwangsweise notwendigen Haltezeit in der eigentlichen Presse nur ein diskontinuierliches Verfahren durchzuführen ist, dafür ist aber eine gute Verarbeitung und eine sichere Entlüftung der Formteile gesichert. Von Vorteil ist es auch hier, wenn die Verdichtungsphase und die Haltezeit nach der Formel t (min.) = s (mm) : 2 oder mehr errechnet wird, wobei s die größte Dicke des Formteils ist. Zu berücksichtigen ist außerdem, daß die Preßzeit für die Maßhaltigkeit und den Verzug des Formteils mitbestimmend ist, bei zu geringer Dauer wird die Neigung zum Verzug größer. Die vorgesehene Verdichtung auf 2,5 bis 5 N/mm$^2$ als spezifische Preßkraft bei einem zweiteiligen Werkzeug und bei Belassung von Entlüftungswegen reicht, insbesondere dann, wenn die Fläche des Formteils gleichmäßig belastbar ist, was bei dem erfindungsgemäßen Verfahren durch Aufheizung des Werkzeuges und entsprechende Belastung des Werkzeuges möglich ist. Typische Verdichtungsverhältnisse liegen dabei erfindungsgemäß im Bereich 1 : 6 bis 1 : 12, bis zu dem das Ausgangsprodukt verdichtet wird. Je nach Material kann es auch zweckmäßig sein, die Preßkraft so zu wählen, daß der Pressenweg allmählich aber deutlicher vor Ablauf der Gesamtzeit erreicht wird. Dannach wird die Verdichtung durch den erreichten Presseweg mechanisch oder hydraulisch verriegelt gehalten und zwar bis zum Ende der Haltezeit. Um ein Lösen des Formteils aus der Form bzw. dem Werkzeug sicherzustellen, sieht die Erfindung vor, daß das Werkzeug mit einer aufgerauhten Oberfläche versehen und vor dem Einführen in die Form mit einem geeigneten Trennmittel besprüht wird.

Zur Verkürzung der einzelnen Taktzeiten ist vorgesehen, daß nach dem Vermischen oder gleichzeitig ein Katalysator zugegeben wird. Das Gemisch wird zweckmäßigerweise in in mehrere Drehtische integrierte Formen gleichzeitig und im vorgebbaren und aufeinanderabgestimmten Takt eingefüllt, die Formen werden dann mit Druck beaufschlagt und nach einer Wartezeit von einer bis wenigen Minuten kann das Formteil ausgeformt und die Form dann gereinigt werden. Durch den entsprechenden Mischvorgang, die vorherige Zerkleinerung auf unter 5 mm und die Zugabe von Katalysatoren vorzugsweise entsprechenden Beschleunigern kann der Preß- und Beheizungsvorgang wesentlich verkürzt werden. Dabei wirkt sich die Feuchtigkeit im Mischprodukt vorteilhaft aus, so daß es auch denkbar ist, gezielt die genannte Trocknungsgrenze von bis zu 4 % zu erhöhen. Dabei ist es beispielsweise auch möglich, unvorbehandeltes, d.h. mehr oder weniger ungetrocknetes Gut zuzuführen, da sich dann der Katalysator schneller und gleichmäßiger auswirken kann. Vorteilhaft ist dabei gleichzeitig, daß durch den zugegebenen Katalysator sich auch eine verbesserte Qualität ergibt, d.h. Formkörper bzw. Platten, die sich durch hohe Elastizität und gleichzeitig Bruchfestigkeit auszeichnen. Vorteilhaft ist weiter, daß durch die Möglichkeit, mehrere parallel zueinander angeordnete Drehtische einzusetzen, der Ausstoß wesentlich erhöht werden kann. Die Form wird mit 3 - 10 N/mm$^2$ beaufschlagt. Bindemittel und Katalysator werden vorgewärmt zugegeben. Bei der Anlage zur Durchführung des erfindungsgemäßen Verfahrens ist der Mischeinrichtung eine Trocknungseinrichtung vorgeordnet oder die Mischeinrichtung ist mit einer Trocknung ausgerüstet. Weiter ist die Presse als zwei- oder mehrteilige Form ausgebildet, deren Teile gegeneinander verriegelbar sind und bei der schließlich die Formen durch einen Tunnelofen transportier- und dort aufheizbar ausgebildet und mit Entlüftungsschlitzen oder -bohrungen ausgerüstet sind. Mit einer derartigen Anlage kann quasi kontinuierlich gearbeitet werden, obwohl die einzelnen Schritte natürlich einzeln vorgenommen werden müssen. Da aber insbesondere die zeitaufwendige Trocknung bei entsprechender Ausbildung des Tunnelofens ohne jedes Auswechseln der Formbehälter möglich ist, wird der vorteilhafte gleichmäßige Fluß des Gesamtverfahrens sichergestellt, zumal der Trocknungsgrad auch noch verändert werden kann. Auch bei 10 % Feuchte ist das Verfahren zu verwirklichen. Die Entlüftung verhindert die Rißbildung und Blasenbildung o.ä., auch die Festigkeit des Endproduktes beeinflussende Schäden.

Nach einer zweckmäßigen Ausbildung der Anlage sind die Formen auf einem auch durch den Tunnelofen verlaufenden Karussel angeordnet und weisen Abstandshalter und selbstbremsende Laufrollen auf. Dadurch ist die Möglichkeit gegeben, im Tunnelofen die Behälter in sehr kurzen Abständen zu führen und zu halten, so daß sie gleichmäßig durch den Tunnelofen hindurchgeführt werden, während sie auf dem übrigen Karussel entsprechend der notwendigen Teilschritte im Abstand gehalten werden, hier, ohne daß unbedingt entsprechende Haltevorrichtungen erforderlich sind. Damit kann die gesamte Anlage mit wenig Personal betrieben werden, was insbesondere bei den heutigen hohen Arbeitskosten von Vorteil ist.

Zur Durchführung des abgewandelten Verfahrens dient eine Anlage, bei der der Mischeinrichtung ein einstellbarer Trockner vorgeordnet oder nachgeordnet oder bei der die Mischeinrichtung mit einem integrierten Trockner ausgerüstet ist und bei der die Presse aus einem Unterteil mit Konturenelementen und Aufsatz und einem in das Unterteil einführbaren Oberteil mit Konturenelementen besteht, wobei die jeweiligen Konturenelemente beheizbar sind und wobei das Oberteil mit Entlüftungsöffnungen versehen ist. Damit ist zunächst einmal eine entsprechende Vorbereitung des Aufgabegutes durch entsprechende Einstellung des Feuchtigkeitsgrades auf 2 bis 4 % möglich, wonach dieses entsprechend vorbereitete Gut dann der Presse zugeführt und hier durch die entsprechend beheizbaren Konturenelemente gleichzeitig auf Temperatur gebracht und verdichtet wird. Der Verdichtungs- oder Recyclingvorgang kann so vergleichmäßigt und sicher gemacht werden, so daß, wie schon erwähnt, auch Beimengungen aufweisende Ausgangsprodukte ohne weiteres verarbeitbar sind. Es ist sogar möglich, den Anteil beispielsweise an Aluminiumfolienabschnitten oder zerkleinerten Aluminiumspänen zu erhöhen oder gar einen solchen Anteil vorzusehen, wodurch die Fähigkeit des Vorproduktes zur Wärmeleitung und damit zu kürzeren Prozeßzeiten beeinflußt wird. Diese Fremdteile zusammen mit der Feuchtigkeit erbringen eine vorteilhafte Vergleichmäßigung des Gesamtverdichtungs- und -bearbeitungsvorganges.

Zur weiteren Optimierung dient eine Anlage, die ergänzend zu den bekannten Bestandteilen vorsieht, daß der Mischeinrichtung mehrere Flansche mit Abzweigförderern zugeordnet sind, daß die Abzweigförderer Zumischventile für den Katalysator aufweisen und daß den Abzweigförderern Drehtische mit integrierten Formen, einer Füll-, einer Pressen- und einer Ausschleußstation nachgeordnet sind. Damit ist die Möglichkeit gegeben, mit einer Schneidmühle und einer Mischeinrichtung quasi kontinuierlich eine Vielzahl von Formkörpern herzustellen, indem die Mischeinrichtung über zugeordnete Flansche gleichzeitig mehrere Abzweigförderer beschickt, über die das Mischprodukt unter Zugabe des Katalysators den Drehtischen und damit den Formen zugeführt wird. Diese Drehtische weisen unter anderem die Pressenstation auf, wo die Formen und damit der eingefüllte Polyurethanschaum, Bindemittel, Katalysator und sonstige Materialiengemische wirksam verformt und in dieser Form auch gehalten werden können. Aufgrund der relativ kleinen Wege auf bzw. in den Drehtischen ist die einzubringende Heizleistung relativ gering, zumal über eine Vorheizung und eine Nachheizung eine Beheizung der Pressenstation nicht unbedingt notwendig ist. Durch das Auseinanderziehen der einzelnen Preß- und Heizvorgänge können die entsprechenden Aggregate wesentlich vereinfacht ausgeführt werden.

Ist es aufgrund des zum Einsatz kommenden Produktes zweckmäßig, eine verlängerte Nachheizstation vorzugeben, ist es gemäß der Erfindung möglich, daß die Drehtische über einen Bypaß verfügen, in den ein Tunnelofen mit kleinen Abmessungen oder in kleinen Abmessungen integriert ist. Die einzelnen Formen durchlaufen den Bypaß und den Tunnelofen, werden hier entsprechend erwärmt bzw. warm gehalten und werden am Ende des Tunnelofens geöffnet und entleert. Noch im Tunnelofen kann dann mit der Abwärme nach entsprechender Reinigung der Formen eine entsprechende Vorwärmung vorgenommen werden, so daß die einzelnen Formen beim Erreichen der Füllstation wieder die gewünschte Temperatur aufweisen, um das Mischprodukt aufzunehmen und dann nach Schließen der Formen entsprechend weiterzutransportieren.

Die weiter vorne schon beschriebene Gleichförmigkeit des Ausstoßen an Formteilen oder Platten wird gewährleistet, indem alle Drehtische von seiten der Ausschleußstation auf ein gemeinsames Förderband übergebend ausgebildet sind, wobei durch die vorgegebene Taktfolge ein dichtes Aneinanderliegen und Abfördern der einzelnen Formteile bzw. Platten gewährleistet ist.

Die Erfindung zeichnet sich insbesondere dadurch aus, daß ein Verfahren und eine Anlage geschaffen sind, mit der verschiedenste Mischungen von PU-Hartschaum u.ä. Materialien recycelt werden können, wobei aus dem damit erzielten Material Formteile und Platten unterschiedlicher Dicke (5 - 30 mm und mehr) geformt werden, die für wiederum verschiedene Einsatzzwecke einsetzbar sind. Vorteilhaft ist dabei, daß durch eine gezielte Einstellung des Feuchtigkeitsgehaltes, des Katalysators, des Zumischverhältnisses z.B. von Papier und der anderen Faktoren wie Temperatur und Druck ein Verfahren zur Verfügung gestellt wird, das eine sichere Verfahrensführung ermöglicht, so daß einwandfrei reproduzierbare Formteile damit hergestellt werden können. Diese Formteile verfügen über eine glatte Oberfläche, eine hohe Stabilität und Elastizität, so daß sie für verschiedene Einsatzzwecke vorteilhaft eingesetzt werden können. Optimal ist auf das Verfahren eine Anlage abgestellt, deren Merkmale eine sichere Durchführung des Verfahrens gewährleisten. Ein quasi kontinuierlicher Betrieb ist sichergestellt.

Weitere Einzelheiten und Vorteile des Erfindungsgegenstandes ergeben sich aus der nachfolgenden Beschreibung der zugehörigen Zeichnung, in der bevorzugte Ausführungsbeispiele mit den dazu notwendigen Einzelheiten und Einzelteilen dargestellt sind. Es zeigen:

Fig. 1 eine annähernd kontinuierlich arbeitende Anlage zum Recyceln von PU-Schaum,

Fig. 2 eine Draufsicht auf ein Formteil aus recyceltem PU-Schaum,

Fig. 3 einen Querschnitt durch das Formteil gem. Fig. 2,

Fig. 4 eine andere Ausführung der Anlage zum Verarbeiten von recyceltem PU-Schaum,

Fig. 5 eine Anlage mit mehreren parallel geschalteten Drehtischen und

Fig. 6 eine Anlage mit Katalysator- und Papierzuführung.

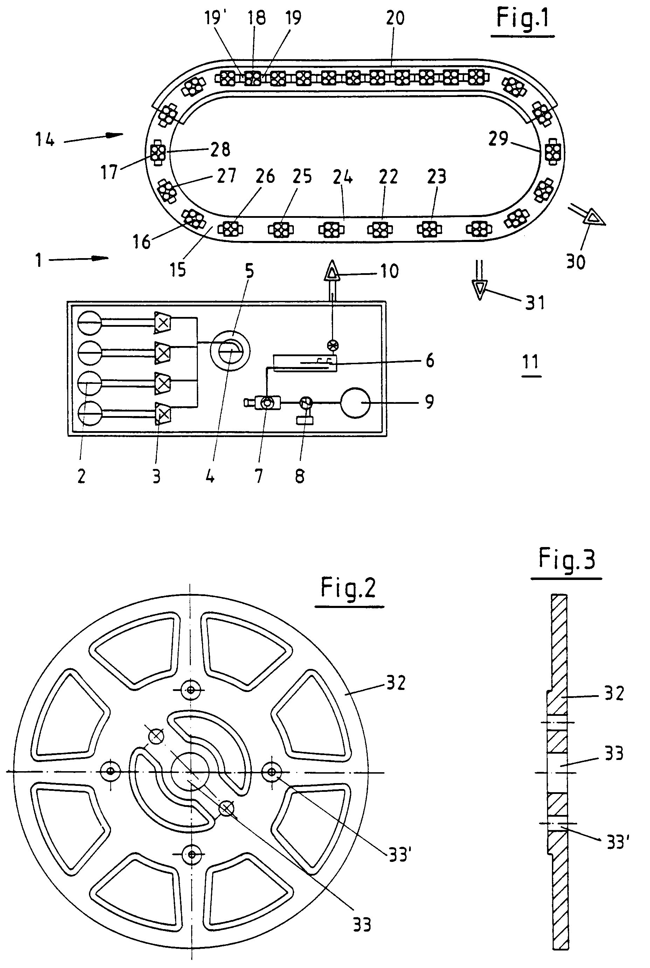

Fig. 1 zeigt eine Verarbeitungsanlage (1), die zunächst einmal mit mehreren Tagessilos (2) ausgerüstet ist. Hier wird das Ausgangsprodukt gelagert und jeweils bedarfsweise der einer Zerkleinerungseinheit, vorzugsweise einer Schneidmühle (3) zugeführt, um dann in dem Zwischenbunker (4) gebunkert zu werden. Dieser Zwischenbunker (4) ist bei der aus Fig. 1 ersichtlichen Ausführung mit einer Trocknungseinrichtung (5) kombinierbar, so daß das Material hier gezielt vor der Vermischung (Bedüsung) mit dem Isocyanat auf eine Feuchte von 2 bis 4 % (- 10 %) gebracht werden kann.

Aus dem Zwischenbunker (4) wird das entsprechend auf eine gleichmäßige Feuchte gebrachte Ausgangsprodukt der Mischeinrichtung (6) zugeführt. Eine entsprechende Mischeinrichtung mit Schnecke ermöglicht ein gleichmäßiges Aufbringen des Isocyanates über die Dosierpumpe (7), der das Isocyanat aus dem Tagesbehälter (8) bzw. dem Großtank (9) zugeführt wird. Das Isocyanat wird über die Dosierpumpe (7) beispielsweise mit hohem Druck, vorzugsweise 60 bar auf das in der Mischeinrichtung (6) bewegte Ausgangsprodukt aufgegeben.

Mit (10) ist die Vorproduktfülleinrichtung bezeichnet, die hier nur allgemein durch einen Pfeil wiedergegeben ist, während das Vorratslager (11) für das Ablagern der hergestellten Formteile vorgesehen ist.

Wesentlicher zweiter Teil der Verarbeitungsanlage (1) ist die Formteilfertigungseinrichtung (14) in Form einer Art Karussel. Das annähernd im Kreis verlaufende Förderband bzw. Karussel (15) wird mit Formen (16, 17, 18) bestückt, die beispielsweise über gebremste Räder verfügen, so daß sie gleichmäßig vom Förderband (15) mitgenommen werden, so lange sie nicht durch Haltevorrichtungen beispielsweise im Tunnelofen (20) festegehalten werden. Über Abstandshalter (19, 19') ist dabei sichergestellt, daß die Formen (16, 17, 18) untereinander immer einen gleichen Abstand wahren.

Mit (22) ist zunächst einmal der Formsäuberungsstand bezeichnet, dem der Werkzeugsäuberungsstand (23) vorgeordnet ist. Die entsprechend gesäuberten Formbehälter (16, 17, 18) werden dann unter dem Füllstand (24) hindurchgeführt, so daß eine gleichmäßige Befüllung des Unterteils mit Formgut bzw. Ausgangsprodukt möglich ist. Am nächsten Stand, dem sogenannten Korrektur- oder Ergänzungsstand (25) wird beispielsweise eine Zwischenplatte eingebracht, die zweckmäßigerweise auf beiden Seiten aufgerauht ist. Dann kann im nächsten Arbeitstakt am Füllstand (26) auch die obere Form mit Formgut gefüllt werden, woraufhin am nächsten Korrektur- und Ergänzungsstand (27) die Deckplatte aufgelegt wird. Auch Mehretagenfächer sind denkbar.

Am Formbehälterschließstand (28) wird die Form (16, 17, 18) geschlossen und anschließend verriegelt.

Im Anschluß daran erreichen die mit verdichtetem Formgut gefüllten Formen (16, 17, 18) den Tunnelofen (20). Hier laufen die einzelnen Formen (16, 17, 18) aufeinander auf, wobei, wie bereits erwähnt, über die Abstandshalter (19) ein gleichmäßger Abstand gesichert ist. Über hier nicht dargestellte Haltevorrichtungen wird erreicht, daß die einzelnen Formen (16, 17, 18) im dichtestmöglichen Abstand durch den Tunnelofen (20) hindurchgeführt werden können.

Mit Verlassen des Tunnelofens erfolgt dann wieder eine Vereinzelung der Formen (16, 17, 18), so daß diese im Takt am Formenbehälterriegelungsstand (29) entriegelt und am Abrüstungsstand (30) geteilt werden können, so daß am Formteilentnahmestand (31) die einzelnen Formteile herausgenommen werden können. Sie werden dann, wie bereits weiter oben gesagt, dem Vorratslager (11) zugeführt und hier gelagert, bis sie verarbeitet werden können.

Ein solches Formteil (32) ist beispielsweise in den Fig. 2 und 3 wiedergegeben, wobei sehr deutlich wird, daß sehr komplizierte Formteile in einer solchen Form (16, 17, 18) hergestellt werden können. Diese verfügen nicht nur über entsprechende Bohrungen bzw. Ausnehmungen (33, 33'), sondern auch über entsprechende Kanten und Bögen.

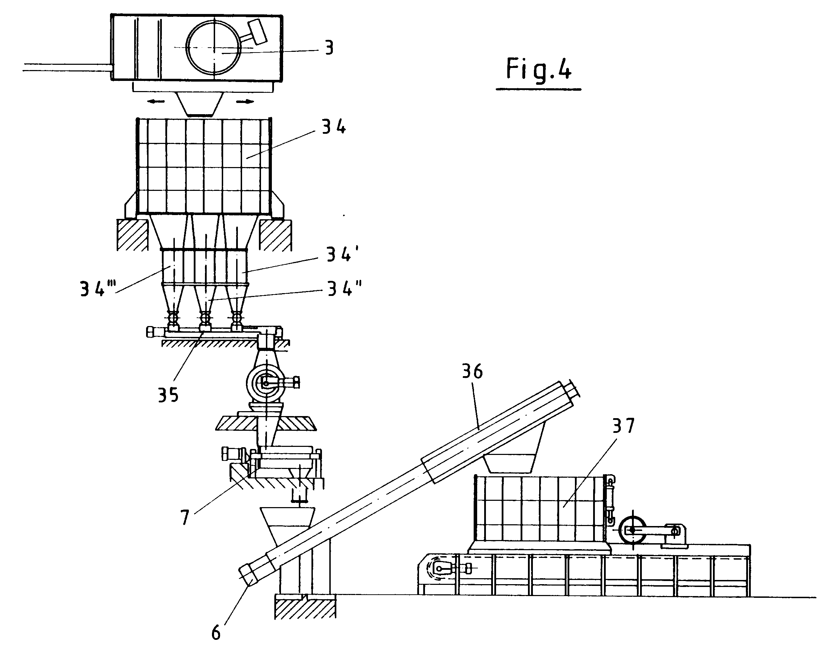

Fig. 4 zeigt eine Einrichtung, bei der im diskontinuierlichen Verfahren Formteile (32) hergestellt werden. Wie bereits weiter vorne erwähnt, wird zunächst in den Schneidmühle (3) oder einem ähnlichen Zerkleinerungswerkzeug das Eingangsprodukt auf eine gleichmäßige Korngröße gebracht, wobei der Stabanteil bei rd. 30 % liegen soll. Im Vorsortierungsbunker (34) erfolgt dann eine gewisse Vorsortierung, d.h. in den Teilbunkern (34', 34", 34''') wird entsprechendes Material vorgehalten, das dann über die Dosierschnecke (35) abgezogen und dem weiteren Prozeß zugeführt wird. Mit (7) ist die Dosierpumpe bezeichnet, über die das Isocyanat o.a. Bindemittel zugeführt wird, bevor das entsprechend feuchte und mit Isocyanat, also an dem Bindemittel versehene Produkt in die Mischeinrichtung (6) gelangt, hier eine lange Mischschnecke. Diese Mischschnecke ist am oberen Ende mit einem Trockner (36) kombiniert, so daß evtl. noch zu feuchte Material auf eine bestimmte Feuchte gebracht werden kann. Zweckmäßig ist es allerdings, diesen Trockner (36) der Dosierschnecke (35) vorzuordnen.

Mit (37) ist allgemein die Presse bezeichnet, in der eine diskontinuierliche Verdichtung des Materials erfolgt, das dann als hier nicht dargestelltes Formteil (32) die Presse (37) wieder verläßt.

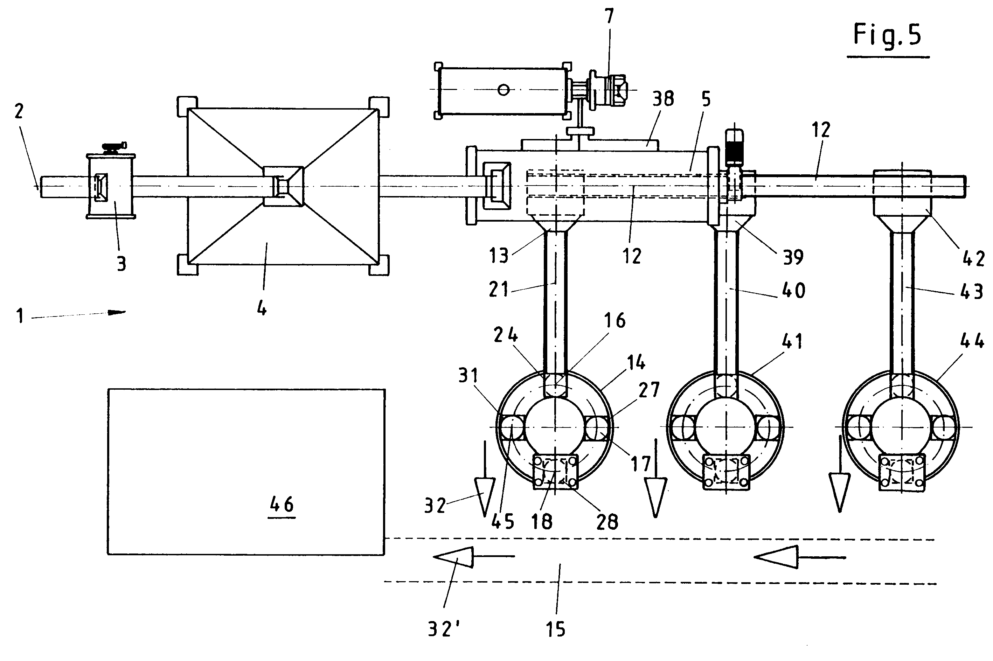

Fig. 5 zeigt eine Verarbeitungsanlage (1), in der Polyurethan-Hartschaum recycelt werden soll und kann. Von dem hier nicht dargestellten Tagessilo (2) wird ein entsprechendes Ausgangsprodukt einer Schneidmühle (3) zugeführt, um hier auf die gewünschte Korngröße von unter 5 mm zerschnitten bzw. zerkleinert zu werden. Als Zwischenbunker (4) dient hier ein Behälter, der einen Auslauftrichter aufweist, der hier nicht dargestellt ist.

Über den Zwischenbunker (4) gelangt das Ausgangsprodukt in eine Mischeinrichtung (6), wo über eine Dosierpumpe (7) Polyurethankleber gezielt und in der notwendigen Menge bzw. gewünschten Menge zugeführt und eingedüst wird. Unterhalb der Mischeinrichtung (6) verläuft ein Verteilungsförderer (12), über den mehrere über Flansche (13, 39, 42) angeflanschte Abzweigförderer (21, 40, 43) mit Mischprodukt versorgt werden.

An die Abzweigförderer (21, 40, 43) sind Drehtische (14, 41, 44) angeschlossen, auf denen bzw. in denen die weitere Bearbeitung des Mischproduktes erfolgt, bevor die Endprodukte auf das Förderband (15) fallen und von hieraus dem Lagerplatz (46) zugeführt werden.

Die einzelnen Drehtische (14, 41, 44) sind mit mehreren Formen (16, 17, 18) bestückt, die mit Mischprodukt gefüllt werden, um dann um den Drehtisch (14, 41, 44) herumgeführt und entsprechend beeinflußt zu werden.

Zunächst werden die Formen (6) in der Füllstation (24) mit dem Ausgangsprodukt gefüllt, woraufhin die zwei- oder mehrteilige Form (16) geschlossen wird, um von hier zur Heizstation (27) gebracht zu werden. Die Heizstation (27) kann auch gleichzeitig die Station sein, wo die Formen geschlossen werden. Im Bereich der Pressenstation (28) erfolgt dann die Verdichtung in der hier mit 18 bezeichneten Form auf die gewünschte Stärke von 10-30 oder auch mehr mm.

Nach Verlassen der Pressenstation (28) erreichen die Formen (16, 17, 18) die Entriegelungs- bzw. Ausschleußstation (31). Hier wird dann der Formkörper (32) dem Förderband (15) übergeben, um als abgekühlter bzw. verfestigter Formkörper (32') dann bis zum Lagerplatz (46) verfahren zu werden.

Für eine gleichmäßige Mischung aus Polyurethan-Hartschaum u.a. Bestandteilen sowie Bindemittel in Form von Polyurethankleber ist es wichtig, daß der Polyurethankleber über die Dosierpumpe (7) gleichmäßig der Mischeinrichtung (6) zugeführt wird. Die Mischeinrichtung (6) verfügt dabei über eine Bedüsungsleiste bzw. Bedüsung (38), die sich über einen großen Teil der Länge der Mischeinrichtung (6) erstreckt, so daß eine frühzeitige und gleichzeitige Durchmischung des Ausgangsproduktes möglich ist.

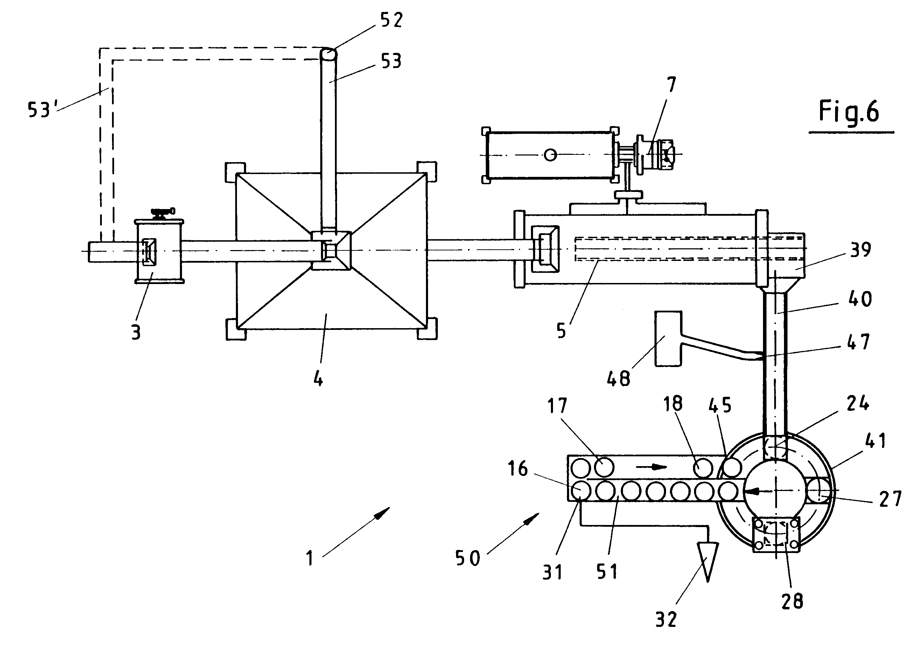

Fig. 6 entspricht bezüglich des Tagessilos (2), der Schneidmühle (3) des Zwischenbunkers (4), der Mischeinrichtung (6) und der Dosierpumpe (7) der Darstellung gem. Fig. 1. Auch der Verteilungsförderer (12) ist hier angedeutet und der Flansch (13) bzw. (39), über den der Abzweigförderer (40) entsprechend bedient wird. Im Bereich des Abzweigförderers (40) ist hier, wie Fig. 2 entnommen werden kann, ein Zumischventil (47) vorgesehen, über das Katalysator aus dem Behälter (48) abgezogen und den Mischprodukt zugedüst wird bzw. aufgedüst wird. Durch entsprechende Ausführung und Führung des Abzweigförderers (40) erfolgt eine entsprechende Durchmischung des Mischproduktes mit dem Katalysator. Zweckmäßigerweise ist der Behälter (48) dazu mit einer hier nicht dargestellten Dosierpumpe versehen.

Abweichend von der Darstellung in Fig. 5 ist hier dem Drehtisch (41) eine besonders ausgebildete Nachheizstation (45) zugeordnet. In Form eines Bypasses (50) werden die einzelnen Formen (16) entweder auf dem Drehtisch oder vom Drehtisch abgezogen in einen Tunnelofen (51) gefördert und hier der entsprechenden Temperatur von rd. 150 °C ausgesetzt. Die entsprechend in der Pressenstation (28) verdichteten Materialien können so der notwendigen Temperaturbeeinflussung ausgesetzt werden, wobei durch die Fördergeschwindigkeit der einzelnen Formen (16, 17, 18) die Beeinflussungszeit von 10-20 Minuten oder auch länger variiert werden kann.

Im Bereich der Ausschleußstation (31) werden die Formen (16, 17, 18) geöffnet und die Formkörper (32) entnommen und dem hier nicht dargestellten Förderband (15) übergeben. Die geöffneten Formen (16, 17, 18) werden dann auf dem weiteren Weg durch den Tunnelofen durch Ausnutzung der Abwärme auf Temperatur gehalten bzw. wieder auf Temperatur gebracht, gereinigt und dann der Füllstation (24) wieder zugeführt.

Die aus Fig. 6 ersichtliche Verarbeitungsanlage (1) kann vorteilhaft auch zur Herstellung von Formkörpern (32) aus Polyurethan-Hartschaum u.a. Bestandteilen und insbesondere Papier ausgenutzt werden, wozu ein Zugabetrichter (52) für entsprechend vorbereitetes Papier vorgesehen ist. Dieses Papier wird über das Förderband (53) dem Zwischenbunker (4) zugeführt oder aber auch dem Förderband, das zur Schneidmühle (3) führt. Letzteres hat den Vorteil, daß dann bereits in der Schneidmühle (3) eine bestimmte Durchmischung erfolgt, die ein gleichmäßiges Produkt ergibt, das dann in der Mischeinrichtung (6) weiter gemischt und vor allem mit Polyurethankleber oder einem ähnlichen Bindemittel versehen wird, um dann in Richtung Drehtisch (14, 41, 44) gebracht und verdichtet zu werden. Über den Zugabetrichter (52) und das Förderband (53) kann die Menge des zugegebenen Papiers bzw. der zugegebenen Zellulose bis auf 80 % hoch geschraubt werden.

Alle genannten Merkmale, auch die den Zeichnungen allein zu entnehmenden, werden allein und in Kombination als erfindungswesentlich angesehen.

## BEISPIEL

Im folgenden ist eine Beispielrezeptur für die Herstellung eines Flansches mit einem Durchmesser von 710 mm und einer Dicke von max. 42 mm wiedergegeben.

Das für die Verarbeitung vorgesehene Material stammt aus der Herstellung von Schaumplatten (Randabschnitte) und wurde in brikettierter Form angeliefert. Zunächst wurde es in der Schneidmühle zerkleinert (Lochweite 8 mm), die anschließende Feuchtigkeitsbestimmung ergab 3,2 %, so daß auf eine Trocknung verzichtet wurde; die Schüttdichte des getrockneten Granulats wurde mit 0,12 g/cm$^3$ ermittelt.

Bei der Siebanalyse wurde folgendes Kornverteilungsspektrum ermittelt:

| | |
|---|---|
| > 4 | 0,4 % |
| > 3,15 | 2,4 % |
| > 2 | 13,8 % |
| > 1 | 37,8 % |
| > 0,5 | 21,1 % |
| > 0,5 | 24,5 % |

Als PU-fremde Bestandteile wurden Abschnitte von Papier und Alu-Folie sowie Gummi- und Lederpartikel festgestellt, die für die Verarbeitung zugelassen wurden; Korngröße > 3,15 bzw. > 4 mm. Der zur Verfügung stehende Pflugscharmischer hat ein Volumen von 0,34 m$^3$, bei einer Füllmenge von 80 % kann also max. 32,64 kg Vorprodukt gemischt werden. Der Ansatz wurde auf 30 kg, das sind etwa 73 % Füllmenge des Mischers festgelegt. In den Mischer wurden nun 28,5 kg PU-Granulat gegeben. Die Isocyanat-Einspritzzeit errechnete sich bei einer spezifischen Einspritzmenge von 32 g/sec mit 46,875 + 2 bis 3 sec., gewählt also 49 sec. Als Isocyanat wurde ein PMDI der Firma Bayer, aus dem mit 25° C temperierten Tagesbehälter genutzt und mittels vorher betriebswarm gelaufener Dosierpumpe bei 60 bar Förderdruck zwei Einstoffdüsen mit einem freien Durchmesser von 0,8 mm zugeführt. Die Einspritzzeit von 49 sec. wurde an der Steuerung der Pumpe vorgewählt. Nach dem Eindüsen des Isocyanates ist das Vorprodukt fertig, in dem beschriebenen Fall verblieb es jedoch im Mischer bis zur Weiterverarbeitung.

Das Werkzeug zur Formgebung besteht aus einem elektrisch beheizten Unterteil mit Konturenelementen, einem Aufsatz für das Unterteil als Schüttrichter für das Vorprodukt und einem elektrisch beheizten Oberteil mit Konturenelementen. Das Unterteil mit Aufsatz befindet sich auf dem Pressentisch, das Oberteil ist am Pressenbär befestigt. Aufsatz und Oberteil sind so bemessen, daS das Oberteilt mit geringem Spiel in den Aufsatz paßt und seiner tiefsten Stellung mit den Konturenelementen des Unterteils einen Hohlraum bildet, der die Gegenkontur des Flansches ist.

Das Werkzeug befindet sich in geöffneter Stellung, d.h. der Pressenbär ist mit dem Oberteil hochgefahren. Die Vorbereitung des Werkzeugs umfaßt das Aufwärmen auf die Solltemperatur von 130° C, die Kontrolle der Sauberkeit der Form und ggfs. Reinigung von anhaftenden Resten, das Aufsprühen von Spray als Trennmittel und/oder das Einlegen von melaminharzgetränktem Trennpapier. Als Prozeßparameter wurde in diesem Beispiel Pressen mit konstantem, vorher einzustellendem Druck gewählt. Die Preßkraft wurde folgendermaßen ermittelt:

Die projezierte Oberfläche des Flansches beträgt 3959,2 cm$^2$, als mittlere Dichte werden ca. 0,8 g/cm$^3$ angestrebt, hierfür ist eine spezifische Pressung von 3,5 N/mm$^2$ erforderlich. Die Preßkraft errechnet sich aus $F = p \times A = 4$ N/mm$^2$ x 3959, 2 cm$^2$ = 1584 kN und wurde über die Druckregelung der Pressenhydraulik eingestellt.

Die Masse des Formteils wird zunächst unter der Annahme einer hoch eingeschätzten mittleren Dichte des Fertigteils von 0,9 g/cm$^3$ berechnet, um die Menge für das Vorprodukt bei der Erstbenutzung des Werkzeugs so zu wählen, daß Schwierigkeiten beim Ausformen wegen zu geringer Verdichtung vermieden werden.

Zum Befüllen der Form wird die vorbestimmte Menge an Ausgangsprodukt abgewogen , in den Aufsatz des Unterteils gegeben und gleichmäßig verteilt. Auf das Ausgangsprodukt kommt nun ebenfalls ein Blatt Trennpapier und der eigentliche Formgebungsprozeß kann beginnen.

Die Gesamtzeit wurde anhand der größten Dicke am Formteil von 42 mm überschlagsmäßig mit 42 mm : 2 = 21 min. ermittelt, wobei zu berücksichtigen ist, daß bei geringerer Verdichtung (etwa 1 : 4,8 an der betrachteten Stelle) die Preßzeit höher gewählt werden sollte, um ein sicheres Ausformen zu gewährleisten. Dementsprechend wurde für die erste Befüllung eine Gesamtzeit von 30 min. festgelegt.

Zur Formgebung wird das Oberteil des Werkzeugs heruntergefahren, so daß das Vorprodukt allseitig vom Werkzeug umgeben ist und verdichtet wird, wobei die in der Schüttung enthaltene Luft entweicht. Für die Betrachtung der Preßzeit wird der Zeitpunkt des beginnenden Druckaufbaues in der Hydraulik notiert. Bei den gewählten Parametern tritt dieses ein, wenn das Oberteil etwa 15 mm vor seiner zu erreichenden Position ist. Von nun an rechnet der Preßvorgang, der mit einem allmählichen Setzen des Oberteils einhergeht. Nach etwa 17 bis 18 min. hat das Oberteil seine unterste Position erreicht, die Presse wird in ihrer Position hydraulisch verriegelt.

Ist die Gesamtzeit für die Formgebung abgelaufen, wird das Oberteil mit dem Aufsatz des Unterteils hochgefahren, das Formteil wird entnommen und geeignet abgelegt, da bis zum Ende der Aushärtung Neigung zum Verzug, vor allem unmittelbar nach dem Ausformen besteht. Bei dem beschriebenen Flansch genügt eine ebene Ablage, die Temperatur des Formteils ist zu beachten. Die Zeitdauer bis zum Erreichen der endgültigen Festigkeit wird bei Abkühlung an ruhender Luft mit etwa 24 Std. eingeschätzt, sie ist abhängig von den Prozeßparametern, längeres Pressen sowie langsameres Abkühlen oder Aushärten bei erhöhten Temperaturen im Ofen führen zur Verkürzung.

In diesem Beispiel wurde beim ersten Pressen ein Obermaß in der Dicke von 9 mm festgestellt. Abhilfe ist möglich durch Erhöhen der Preßkraft oder wie im Beispiel durch anteilige Verringerung der Ausgangsproduktmenge, die eingangs sehr hoch gewählt wurde. Die durchschnittliche Dicke des Flansches beträgt laut Zeichnung etwa 30 mm, war also bei der ersten Pressung 39 mm; daher ist die Ausgangsproduktmenge auf 7582 g zu verringern. Bei der zweiten Pressung wurden 7600 g Ausgangsprodukt verwendet und Maßhaltigkeit erreicht.

Bei diesem Beispiel handelt es sich um das diskontinuierlich ablaufende Verfahren. Ein Beispiel für das Verfahren mit dem Tunnelofen würde insbesondere wesentlich kürzere Taktzeiten und damit eine höhere Kontinuität ergeben.

## Patentansprüche

1. Verfahren zum Recyceln von Polyurethan-Hartschaum und zur Herstellung von Formkörpern aus vorbehandeltem Hartschaum, durch Zerkleinern des Ausgangsproduktes auf < 10 mm, Vermischen mit einem Bindemittel (Polyurethankleber) und Verpressen bei Temperaturen zwischen 100 und 200 °C und einem Druck von bis zu 20 N/mm$^2$, **dadurch gekennzeichnet,** daß das Ausgangsprodukt auf 2 bis 4 % Feuchtigkeit getrocknet und dann in eine das Formteil vorgebende, mehrteilige Form eingefüllt wird, daß die Formen unter Erzeugung des Verdichtungsdruckes zusammengepreßt und verriegelt, die Formteile dabei unter Belassung von Entlüftungswegen verdichtet, die Formen dann von außen bis zu einer Formguttemperatur von 80 bis 180 °C erwärmt und für eine vorgegebene Haltezeit geschlossen gehalten und die Formteile dann ausgeformt werden.

2. Verfahren nach Anspruch 1, **dadurch gekennzeichnet,** daß Ausgangsprodukt auf < 2 bis 4 mm unter Einhaltung eines Staubanteils von rd. 30 % zerkleinert, mit 8 bis 40 g/sec Isocyanat in Form eines Sprühnebels beaufschlagt und dann zu Formteilen verarbeitet wird.

3. Verfahren nach Anspruch 1, **dadurch gekennzeichnet,** daß der Verdichtungsdruck innerhalb der Form kontinuierlich auf 12 bis 20 N/mm$^2$ gebracht wird und die Formen dann unter Druck entriegelt werden.

4. Verfahren nach Anspruch 1, **dadurch gekennzeichnet,** daß das Formgut in der Form vorzugsweise beim Durchlaufen durch einen Ofen auf ± 130 °C erwärmt wird.

5. Verfahren nach Anspruch 1, **dadurch gekennzeichnet,** daß dem Ausgangsprodukt während der Zerkleinerung Zuschlagstoffe wie PVC-Granulat oder gar Kabelschrott oder Zellulose in Form von Papier und Pappe mit einem Anteil bis 80 % zugemischt wird.

6. Verfahren zum Recyceln von Polyurethan-Hartschaum und zur Herstellung von Formkörpern aus vorbehandeltem Hartschaum, durch Zerkleinern des Ausgangsproduktes auf < 10 mm, Vermischen mit einem Bindemittel (Polyurethankleber) und Verpressen bei Temperaturen zwischen 100 und 200 °C und einem Druck von bis zu 20 N/mm$^2$, **dadurch gekennzeichnet,** daß das Ausgangsprodukt auf < 4 mm zerkleinert und 2 bis 4 % Feuchtigkeit getrocknet, dann in einer Verdichtungsphase in einem zweiteiligen Werkzeug mit 2,5 bis 5 N/mm$^2$ unter Belassung von Entlüftungswegen verdichtet und daß anschließend der Druck für eine vorgegebene Haltezeit aufrechterhalten wird, wobei das zweiteilige Werkzeug auf 80 bis 180 °C beheizt wird, woraufhin die Formteile ausgeformt werden.

7. Verfahren nach Anspruch 1 oder Anspruch 6,
**dadurch gekennzeichnet,**
daß nach dem Vermischen oder gleichzeitig ein Katalysator (Beschleuniger) gegeben wird.

8. Verfahren nach Anspruch 7,
**dadurch gekennzeichnet,**
daß das Bindemittel und der Katalysator (Beschleuniger) vor dem Zumischen vorgewärmt werden.

9. Anlage zur Aufarbeitung von Polyurethan-Hartschaum mit einer Mühle, einem Klassiersieb, einer Mischeinrichtung und einer Presse zur Durchführung des Verfahrens nach Anspruch 1 bis Anspruch 5,
**dadurch gekennzeichnet,**
daß die Mühle als Schneidmühle (3) ausgebildet und der Mischeinrichtung (6) eine einstellbare Trocknungseinrichtung (5) vorgeordnet oder daß die Mischeinrichtung (6) mit einer Trocknung ausgerüstet ist, daß die Presse als zwei- oder mehrteilige Form (16, 17, 18) ausgebildet ist, deren Teile gegeneinander unter Druck verriegelbar sind und daß die Formen (16, 17, 18) durch einen Tunnelofen (20) transportier- und dort aufheizbar ausgebildet und mit Entlüftungsschlitzen oder Bohrungen ausgerüstet sind.

10. Anlage zur Aufarbeitung von Polyurethan-Hartschaum mit einer Mühle, einem Klassiersieb, einer Mischeinrichtung und einer Presse zur Durchführung des Verfahrens nach Anspruch 6 bis Anspruch 8,
**dadurch gekennzeichnet,**
daß der Mischeinrichtung (6) ein einstellbarer Trockner (36) vorgeordnet oder nachgeordnet oder daß die Mischeinrichtung mit einem integrierten Trockner (36) ausgerüstet ist, daß die Presse (37) aus einem Unterteil mit Konturenelementen und Aufsatz und einem in das Unterteil einführbaren Oberteil mit Konturenelementen besteht, wobei die jeweiligen Konturenelemente beheizbar sind und wobei das Oberteil mit Entlüftungsöffnungen versehen ist.

11. Anlage nach Anspruch 9,
**dadurch gekennzeichnet,**
daß der Mischeinrichtung (6) mehrere Flansche (13, 39, 42) mit Abzweigförderern (21, 40, 43) zugeordnet sind, daß die Abzweigförderer Zumischventile (47) für den Katalysator aufweisen und daß den Abzweigförderern Drehtische (14, 41, 44) mit integrierten Formen (16, 17, 18) einer Füll- (24), einer Pressen- (28) und einer Ausschleußstation (31) nachgeordnet sind.

12. Anlage nach Anspruch 9,
**dadurch gekennzeichnet,**
daß die Formbehälter (16, 17, 18) auf einem auch durch den Tunnelofen (20) verlaufenden Karussel (15) angeordnet sind und Abstandhalter und selbstbremsende Laufrollen aufweisen.

13. Anlage nach Anspruch 11,
**dadurch gekennzeichnet,**
daß die Drehtische (14, 41, 44) über einen Bypaß (50) verfügen, in den ein Tunnelofen (51) mit kleinen Abmessungen integriert ist.

14. Anlage nach Anspruch 11,
**dadurch gekennzeichnet,**
daß alle Drehtische (14, 41, 44) von seiten der Ausschleußstation (31) auf ein gemeinsames Förderband (15) übergebend ausgebildet sind.

**Claims**

1. Method of recycling rigid expanded polyurethane and for producing mouldings out of pre-treated rigid foam by shredding the starting product to < 10 mm, mixing with a binding agent (polyurethane adhesive) and compacting at temperatures of between 100 and 200 °C and a pressure of up to 20 N/mm$^2$
**characterised in that**
the starting product is dried to a moisture content of 2 to 4 % and then inserted into a multi-part mould for producing the moulding, in that the moulds are pressed together and locked on the production of compaction pressure and the mouldings are compressed leaving ventilation gaps, the moulds are then heated externally to a mould product temperature of 80 to 180° C, kept closed for a prescribed period of time and the mouldings are then removed from the moulds.

2. Method according to claim 1,
**characterised in that**
the starting product is shredded to < 2 to 4 mm maintaining a dust content of about 30 %, pressurised with isocyante at 8 to 40 g/sec in the form of a spray mist and then worked into mouldings.

3. Process according to claim 1,
   **characterised in that**
   the compaction pressure inside the mould is kept continually at 12 to 20 N/mm$^2$ and the moulds are then unlocked under pressure.

4. Method according to claim 1,
   **characterised in that**
   the mould product in the mould is heated to $\pm$ 130 °C preferably by passing through a furnace.

5. Method according to claim 1,
   **characterised in that**
   during the shredding process loading materials such as PVC granulate or even cable scrap or cellulose in the form of paper and card are mixed with the starting product in a proportion of up to 80 %.

6. Method of recycling rigid expanded polyurethane and for producing mouldings out of pre-treated rigid foam by shredding the starting product to < 10 mm, mixing with a binding agent (polyurethane adhesive) and compacting at temperatures of between 100 and 200 °C and a pressure of up to 20 N/mm$^2$
   **characterised in that**
   the starting product is shredded to < 4 mm and dried to a moisture content of 2 to 4 %, then compacted in a compacting phase in a two-part mould at 2.5 to 5 N/mm$^2$ leaving ventilation gaps, and in that subsequently the pressure is maintained for a prescribed period of time, in which the two-part mould is heated to 80 to 180 °C, after which the moulded parts are removed from the moulds.

7. Method according to claim 1 or claim 6,
   **characterised in that**
   a catalyst (accelerator) is added after mixing or simultaneously therewith.

8. Method according to claim 7,
   **characterised in that**
   the binding agent and the catalyst (accelerator) are heated before mixing.

9. Installation for processing rigid expanded polyurethane with a mill, a sizing screen, a mixing device and a press for performing the method according to claims 1 to 5,
   **characterised in that**
   the mill is designed as a cutting mill (3) and an adjustable drying device (5) is arranged before the mixing device (6) or the mixing device (6) is equipped with a drier, in that the press is designed as a two or multiple part mould (16, 17, 18) the parts of which can be locked together under pressure, and in that the moulds (16, 17, 18) are designed to be transportable through a tunnel furnace (20) and can be heated there and are provided with ventilation slots or bores.

10. Installation for processing rigid expanded polyurethane with a mill, a sizing screen, a mixing device and a press for performing the method according to claims 6 to 8,
    **characterised in that**
    an adjustable drier (36) is arranged before or after the mixing device (6) or in that the mixing device is equipped with an integrated drier (36), in that the press (37) comprises a lower part with profiled elements and cap and an upper part with profiled elements insertable into the lower part, whereby the respective profiled elements can be heated and whereby the upper part is provided with ventilation gaps.

11. Installation according to claim 9,
    **characterised in that**
    several flanges (13, 39, 42) with branch conveyors (21, 40, 43) are connected to the mixing device (6), in that the branch conveyors comprise valves (47) for adding the catalyst, and in that rotary tables (14, 41, 44) with integrated moulds (16, 17, 18) a filling (24), press (28) and removal station (31) are connected to the branch conveyors.

12. Installation according to claim 9,
    **characterised in that**
    the mould containers (16, 17, 18) are arranged on a carousel (15) running though the tunnel furnace (20) and comprise spacers and automatic-braking rollers.

13. Installation according to claim 11,
    **characterised in that**
    the rotary tables (14, 41, 44) comprise a bypass (50) in which a tunnel furnace (51) of small dimensions is integrated.

14. Installation according to claim 11,
    **characterised in that**
    all the rotary tables (14, 41, 44) are designed to transfer from the removal station (31) onto a joint conveyor belt (15).

**Revendications**

1. Procédé de recyclage de mousse dure de polyuréthane et de fabrication de corps moulés à partir de mousse dure prétraitée, par fragmentation du produit initial à > 10 mm, mélange avec un liant (colle de polyuréthane) et mise sous pression à des températures comprises entre 100 et 200 °C et sous une pression pouvant aller jusqu'à 20 N/mm$^2$, caractérisée
   en ce que le produit initial est séché jusqu'à une humidité de 2 à 4 %, puis introduit dans un moule en plusieurs parties, donnant l'élément moulé, en ce que les moules sont pressés et verrouillés pour produire la pression de compression, les éléments moulés sont compactés en laissant des voies d'aération, les moules sont ensuite chauffés de l'extérieur jusqu'à une température du produit de 80 à 180 °C et sont maintenus fermés pendant un temps de maintien donné et les éléments moulés sont ensuite démoulés.

2. Procédé selon la revendication 1,
   caractérisée
   en ce que le produit initial est fragmenté à < 2 à 4 mm en respectant une proportion de poussière d'environ 30 %, est traité avec 8 à 40 g/sec d'isocyanate sous la forme d'un brouillard de pulvérisation et est ensuite transformé en éléments moulés.

3. Procédé selon la revendication 1,
   caractérisée
   en ce que la pression de compression à l'intérieur du moule est amenée en continu jusqu'à 12 à 20 $N/mm^2$ et les moules sont ensuite déverrouillés sous pression.

4. Procédé selon la revendication 1,
   caractérisée
   en ce que le produit dans le moule est chauffé de préférence par passage à travers un four, à ± 130 °C.

5. Procédé selon la revendication 1,
   caractérisée
   en ce qu'au produit initial sont ajoutés pendant la fragmentation des additifs tels que des granulés de PVC ou même de déchets de câble ou de la cellulose sous forme de papier et de carton, jusqu'à une proportion de 80 %.

6. Procédé de recyclage de mousse dure de polyuréthane et de fabrication de corps moulés à partir de mousse dure prétraitée, par fragmentation du produit initial à < 10 mm, mélange avec un liant (colle de polyuréthane) et mise sous pression à de températures comprises entre 100 et 200 °C et sous une pression pouvant aller jusqu'à 20 $N/mm^2$,
   caractérisée
   en ce que le produit initial est fragmenté à < 4 mm et séché jusqu'à une humidité de 2 à 4 %, puis dans une phase de compression est compacté dans un outil en deux parties sous 2,5 à 5 $N/mm^2$, en lais-sant des voies d'aération et en ce qu'ensuite la pression est maintenue pendant un temps de maintien donné, l'outil en deux parties étant chauffé jusqu'à 80 à 180 °C, après quoi les éléments moulés sont démoulés.

7. Procédé selon la revendication 1 ou la revendication 6,
   caractérisée
   en ce qu'après le mélange ou simultanément un catalyseur (accélérateur) est ajouté.

8. Procédé selon la revendication 7,
   caractérisée
   en de que le liant et le catalyseur (accélérateur) sont préchauffés avant le mélange.

9. Installation de préparation de mousse dure de polyuréthane comportant un broyeur, un crible classeur, und dispositif de mélange et une presse pour la mise en oeuvre du procédé selon les revendications 1 à 5,
   caractérisée
   en ce que le broyeur est un broyeur-coupeur (3) et en amont du dispositif de mélange (6) est prévu un dispositif de séchage (5) réglable ou en ce que le dispositif de mélange (6) est équipé d'un séchage, en ce que la presse est un moule (16, 17, 18) en deux parties ou plus, dont les parties peuvent être verrouillées les unes par rapport aux autres sous pression et en ce que les moules (16, 17, 18) sont transportables à ravers un four-tunnel (20) et peuvent y être chauffés et sont équipés de fentes d'aération ou de perçages.

10. Installation de préparation de mousse dure de polyuréthane avec un broyeur, un crible classeur, un dispositif de mélange et une presse pour la mise en oeuvre du procédé selon le revendications 6 à 8,
    caractérisée
    en ce qu'en amont ou en aval du dispositif de mélange (6) est prévu un séchoir (36) réglable ou en ce que le dispositif de mélange est équipé d'un séchoir (36) intégré, en ce que la presse (37) est constituée d'une partie inférieure avec éléments de contour et chapeau et d'une partie supérieure à introduire dans la partie inférieure, avec éléments de contour, les éléments de contour respectifs pouvant être chauffés et la partie supérieure étant pourvue d'ouvertures d'aération.

11. Installation selon la revendication 9,
    caractérisée
    en ce qu'au dispositif de mélange (6) sont associeées plusieurs brides (13, 39, 42) avec convoyeurs de dérivation (21, 40, 43), en ce que les convoyeurs de dérivation comportent des vannes de mélange (47) pour le catalyseur et en ce qu'en aval des convoyeurs de dérivation sont prévues des tables tournantes (14, 41, 44) avec moules (16, 17, 18) intégrés d'un poste de remplissage (24), d'un poste de presse (28) et d'un poste d'éclusage (31).

12. Installation selon la revendication 9,
    caractérisée
    en ce que les moules (16, 17, 18) sont placés sur un carrousel (15) traversant aussi le four-tunnel (20) et comportent des écarteurs et de roues de roulement à autofreinage.

**13.** Installation selon la revendication 11,
caractérisée
en ce que les tables tournantes (14, 41, 44) disposent d'une dérivation (50) dans laquelle est intégré un four-tunnel (51) de petites dimensions.

**14.** Installation selon la revendication 11,
caractérisée
en ce que toutes les tables tournantes (14, 41, 44) sont conformées pour le transfert de la part du poste d'éclusage (31) sur un tapis de convoyage (15) commun.

Fig.1

Fig.2

Fig.3

Fig.4

Fig.5

Fig.6

EP 0 586 644 B1